(19) Europäisches Patentamt
European Patent Office
Office européen des brevets

(11) **EP 4 205 829 A1**

(12) **EUROPEAN PATENT APPLICATION**
published in accordance with Art. 153(4) EPC

(43) Date of publication:
**05.07.2023  Bulletin 2023/27**

(21) Application number: **21861972.4**

(22) Date of filing: **20.08.2021**

(51) International Patent Classification (IPC):
**B01D 39/16** (2006.01)    **B01D 46/00** (2022.01)
**A62B 23/02** (2006.01)

(52) Cooperative Patent Classification (CPC):
**A62B 23/02; B01D 39/16; B01D 46/00;**
Y02A 50/2351

(86) International application number:
**PCT/KR2021/011068**

(87) International publication number:
**WO 2022/045675 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **25.08.2020  KR 20200107257
19.08.2021  KR 20210109334**

(71) Applicant: **Korea Research Institute of Chemical
Technology
Daejeon 34114 (KR)**

(72) Inventors:
• **HWANG, Sung Yeon
Daejeon 34114 (KR)**

• **OH, Dong Yeop
Daejeon 34114 (KR)**
• **PARK, Jeyoung
Daejeon 34114 (KR)**
• **KOO, Jun Mo
Daejeon 34114 (KR)**
• **JEON, Hyeon Yeol
Daejeon 34114 (KR)**
• **KIM, Hye Ri
Daejeon 34114 (KR)**
• **CHOI, Sejin
Daejeon 34114 (KR)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **WEB-FILM FILTER FORMED OF ALIPHATIC POLYESTER FIBER FOR PURIFYING AIR, AND METHOD FOR PRODUCING SAME**

(57)    Provided is a filter for air purification having a high particulate matter removal efficiency, using a web-film including a biodegradable aliphatic polyester-based fiber, as a method of alleviating the burden of waste of an old filter for air purification. More specifically, provided is a filter for air purification having a less reduced particulate matter removal efficiency even in moisture or high humidity by coating a fiber surface with chitosan.

[FIG. 2]

EP 4 205 829 A1

**Description**

[Technical Field]

The present invention relates to a web-film filter for air purification including an aliphatic polyester fiber and a method of producing the same.

[Background Art]

Recently, due to the unprecedented spread of the coronavirus diseases (COVID-19), a demand for face masks is increased and a shortage of supply and demand is occurring around the world. The demand is for essential daily use products for protecting all individuals from respiratory infections, ranging from high efficiency N95 labeled masks for medical professionals to masks for the public. In addition, in order to prevent secondary exposure of an infected mask, it is recommended by the authorized government agencies for disease control and prevention to discard disposable masks after use or to limitedly consider reuse of the masks after thoroughly disinfecting the masks with a UV light sterilizer. For this reason, a rapid increase in disposable mask waste is already in progress, which causes an environmental pollution problem.

Particulate matter (PM) is also a big issue of air pollution. PM is classified into PM2.5 (particulate matter having a diameter of 2.5 um or less), PM10 (particulate matter having a diameter of 10 $\mu$m or less), and the like depending on the size, and in particular, since PM2.5 is highly likely to penetrate into the human body, it is designated as Group I carcinogen by the International Agency for Research on Cancer. As the means for protection against the threats, the importance of face masks used by an individual is growing day by day.

A filter composed of fibers is a filter having a high air permeability and is used in various air filtration fields. Two PM filter modes are applied to a general fiber type filter, which are physical sieving and electrostatic adsorption. Physical sieving is a method of filtering by size difference between particles and pores, and for removing very fine particles, nanofibers are densely built up to form very fine pores, which causes a respiratory disorder due to high pressure drop. Electrostatic adsorption is possible since PM is composed of generally charged particles and aerosols. In order to implement the function, high voltage is applied to a polymer material filter to impart electrostatic properties, but there is a risk of reduced adsorption ability of particulate matter since electrostatic force is lost only by high humidity.

Waste from an old filter should be buried or incinerated, and development of a high functional biodegradable mask filter for solving the problem of overflowing demand and waste is highly demanded.

[Disclosure]

[Technical Problem]

An object of the present invention is to provide a filter for air purification having a high particulate matter removal efficiency, using a web-film including a biodegradable aliphatic polyester-based fiber, as a method of alleviating the burden of waste of an old filter for air purification.

More specifically, an object of the present invention is to provide a filter for air purification having a less reduced particulate matter removal efficiency even in high moisture and humidity by coating a fiber surface with chitosan.

Another object of the present invention is to provide a filter for air purification which is degradable to cause less environmental pollution and has an excellent virus adsorption effect.

[Technical Solution]

In one general aspect, a web-film filter for air purification includes an aliphatic polyester microfiber coated with chitosan.

In an exemplary embodiment, the chitosan may be any one or more selected from chitosan nanoparticles and nanowhiskers.

In an exemplary embodiment, the filter may be obtained by coating or impregnating a web-film including an aliphatic polyester microfiber with an aqueous solution of pH 2 to 6 including any one or more selected from chitosan nanoparticles and nanowhiskers.

In an exemplary embodiment, the microfiber may have a diameter of 50 nm to 50 $\mu$m.

In an exemplary embodiment, the chitosan may be acetylated chitosan.

In an exemplary embodiment, the acetylated chitosan may have a degree of acetylation of 90% or less.

In an exemplary embodiment, the web-film filter for air purification may have a PM10 removal efficiency of 70% or more at a wind speed of 1 m/s.

In an exemplary embodiment, the web-film filter for air purification may have a PM2.5 removal efficiency of 60% or more at a wind speed of 1 m/s.

In an exemplary embodiment, the web-film filter for air purification may have a PM10 removal quality factor of 0.05 Pa$^{-1}$ or more at a wind speed of 1 m/s.

In an exemplary embodiment, the web-film filter for air purification may have a PM2.5 removal quality factor of 0.04 Pa$^{-1}$ or more at a wind speed of 1 m/s.

In an exemplary embodiment, the aliphatic polyester may be any one or a mixture of two or more selected from the group consisting of polyhydroxybutyrate (PHP), polyhydroxybutyrate-co-valerate (PHBV), polycaprolactane, polybutylene succinate, polybutylene succinate-co-adipate, polyglycolic acid (PGA), polylactide or polylactic acid (PLA), polybutylene oxalate, polyethylene adipate, polyparadioxanone, polymorpholinebione, polybutylene adipate-co-terephthalate, polybutylene adipate-co-furanoate, polydioxipane-2-one, and the like.

In an exemplary embodiment, when the filter is immersed in water for 10 minutes and then dried for 24 hours, and the PM10 removal efficiency and the PM2.5 removal efficiency are measured in a chamber having a relative humidity of 90% RH, a removal efficiency reduced amount according to the following Equation 1 may be 3% or less:

$$\text{[Equation 1]}$$

$$\text{Removal efficiency reduced amount} = Re_1 - Re_2$$

wherein $Re_1$ is a PM removal efficiency of a filter in its initial state which is not immersed in water at a wind speed of 1 m/s, and $Re_2$ is a PM removal efficiency of a filter which is immersed in water for 10 minutes and then dried for 24 hours at a wind speed of 1 m/s.

In another general aspect, a face mask product uses the web-film filter according to the exemplary embodiment.

In another general aspect, an air cleaner uses the web-film filter according to the exemplary embodiment.

In still another general aspect, a method of producing a web-film filter for air purification includes:

    a) electrospinning a polymer solution including an aliphatic polyester and a solvent to produce a web-film; and

    b) coating or impregnating the web-film with a chitosan aqueous solution.

In an exemplary embodiment, the chitosan aqueous solution may be prepared by including:

    hydrolyzing chitosan or $\alpha$-chitin powder in an acid solution;
    stirring the hydrolyzed chitin and a basic solution and then washing the solution; and
    preparing the obtained chitosan as an aqueous solution of pH 2 to 6.

In an exemplary embodiment, the chitosan may be any one or more selected from chitosan nanoparticles and nanowhiskers.

In an exemplary embodiment, the chitosan aqueous solution may be prepared by including:

    adding any one or more acetylating agents selected from acetic acid and anhydrous acetic acid to a dispersion in which chitosan or chitosan oligosaccharide is in a state of being dispersed in water or a mixed solvent of water and an organic solvent to perform an acetylation reaction;
    stirring an acetylated reactant and a basic solution and then washing the solution; and
    preparing the obtained acetylated chitosan as an aqueous solution of pH 2 to 6.

In an exemplary embodiment, the acetylated chitosan may have a degree of acetylation of 90% or less.

[Advantageous Effects]

The filter for air purification according to an exemplary embodiment of the present invention has an excellent particulate matter removal efficiency, and in the case of the web-film filter of microfiber coated with chitosan, provides a more improved particulate matter removal efficiency.

In addition, even under the conditions of high moisture and direct contact with water, there is little reduction in fine dust removal efficiency by moisture and humidity, and excellent particulate matter removal efficiency is provided.

In addition, even in a low pressure drop, a high level of particulate matter removal efficiency is provided.

In addition, since biodegradation is allowed, an environmental problem may be solved, and since a virus adsorption effect is achieved, the present invention may be useful as a filter for air purification. More specifically, the present invention may be applied to a face mask, a filter for an air cleaner, and the like, but is not limited thereto.

[Description of Drawings]

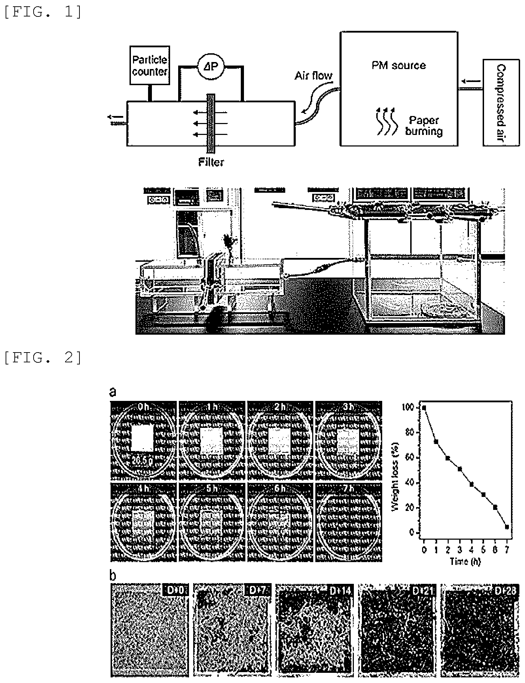

FIG. 1 is a schematic diagram of a particulate matter filter experimental chamber.

FIG. 2 is photographs showing biodegradation evaluation of a web-film produced in Example 1, in which (a) photographs of a film change over an enzyme decomposition time (Enzyme:Lipase *from thermomyces lanuginosus*) and a graph of a corresponding weight change, and (b) photographs of a film change over a buried time in compost soil.

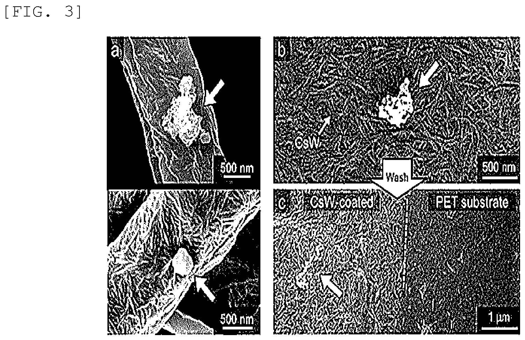

FIG. 3 is photographs of a surface of a web-film produced in Example 2 observed by a scanning electron microscope, after an *Escherichia coli bacteriophage Phi X174* virus spray liquid was filtered through the web-film (a), and photographs showing a virus adsorption change after washing the web-film of Example 2 and general polymer PET (b, c).

[Best Mode]

Hereinafter, the present invention will be described in more detail. However, the following specific examples or exemplary embodiments are only a reference for describing the present invention in detail, and the present invention is not limited thereto, and may be implemented in various forms.

In addition, unless otherwise defined, all technical terms and scientific terms have the same meanings as those commonly understood by one of those skilled in the art to which the present invention pertains. The terms used herein are only for effectively describing a certain specific example, and are not intended to limit the present invention.

In addition, the singular form used in the specification and claims appended thereto may be intended to also include a plural form, unless otherwise indicated in the context.

In addition, unless particularly described to the contrary, "comprising" any elements will be understood to imply further inclusion of other elements rather than the exclusion of any other elements.

In the present invention, a "microfiber" refers to a fiber having a diameter of tens of micrometers or less, more specifically, for example, 100 $\mu$m or less.

The inventors of the present invention found that a biodegradable aliphatic polyester is used to produce a web-film filter, which is coated with chitosan, thereby providing a new web-film filter for air purification which has a more improved adsorption removal efficiency and has little reduction in fine dust removal efficiency by moisture and humidity even under the high humidity conditions and the conditions being in direct contact with water, and thus, completed the present invention.

In addition, as compared with the case using a fiber produced by spinning an aliphatic polyester alone or using a fiber spun in a state in which chitosan is mixed with an aliphatic polyester, it was confirmed that the filter produced by the method of the present invention has an excellent fine dust adsorption removal efficiency and an excellent fine dust adsorption removal efficiency even under the high humidity conditions and the conditions of being in direct contact with water.

First, an exemplary embodiment of the web-film filter for air purification of the present invention will be described.

The web-film filter for air purification according to an exemplary embodiment of the present invention includes an aliphatic polyester microfiber coated with chitosan.

In an exemplary embodiment, the chitosan may be any one or more selected from chitosan nanoparticles and nanowhiskers. Though not limited thereto, the chitosan nanoparticles may have an average particle diameter of 5 nm to 500 nm, and the nanowhiskers may have an average diameter of 5 nm to 500 nm and an aspect ratio (long axis/ short axis) of 2 to 100, but the present invention is not limited thereto. The average particle diameter and the average length may be measured by observation with a scanning electron microscope (SEM).

More specifically, in coating of chitosan, coating or impregnation with an aqueous solution of pH 2 to 6 including any one or more selected from chitosan nanoparticles and nanowhiskers is performed. Accordingly, the surface of the aliphatic polyester microfiber may be coated. By coating the surface as such, effects of having an excellent fine dust adsorption removal efficiency and having an excellent fine dust adsorption removal efficiency even under the high humidity conditions or under the conditions of being in direct contact with water may be provided, as compared with the case of spinning after mixing with chitosan in fiber spinning. In addition, a filter allowing virus adsorption may be provided.

In another exemplary embodiment, the chitosan may be acetylated chitosan. More specifically, the acetylated chitosan may have a degree of acetylation of 90% or less, more specifically a degree of acetylation of 70% or less.

The chitosan coating may be coating or impregnation with an aqueous solution of pH 2 to 6 including acetylated chitosan having a degree of acetylation of 90% or less. Accordingly, the surface of the aliphatic polyester microfiber may be coated.

In an exemplary embodiment of the present invention, the aliphatic polyester microfiber may be produced by electrospinning of a polymer solution in which an aliphatic polyester and a solvent are mixed.

Though not limited thereto, the microfiber may be produced by a method of solution spinning or melt spinning in addition to the electrospinning.

Though not limited thereto, the microfiber may have a diameter of 50 nm to 50 $\mu$m, more preferably 100 nm to 40 $\mu$m, and within the range, it may be appropriate for being applied to the web-film filter for air purification.

The aliphatic polyester is not limited as long as it is biodegradable, but specifically, for example, may be any one or a mixture of two or more selected from the group consisting of polyhydroxybutyrate (PHP), polyhydroxybutyrate-co-valerate (PHBV), polycaprolactam, polybutylene succinate, polybutylene succinate-co-adipate, polyglycolic acid (PGA), polylactide or polylactic acid (PLA), polybutylene oxalate, polyethylene adipate, polyparadioxanone, polymorpholinebione, polybutylene adipate-co-terephthalate, polybutylene adipate-co-furanoate, polydioxipane-2-one, and the like. More preferably, the aliphatic polyester may be polybutylene succinate and may have a number average molecular weight of 20 to 200 kg/mol, but is not limited thereto.

Any solvent may be used without limitation as long as it may dissolve the aliphatic polyester and allows electrospinning. Specifically, for example, a mixed solvent of chloroform and alcohol may be used, and more specifically, for example, a mixed solvent in which chloroform and ethanol are mixed at a weight ratio of 5 to 15:1 may be used.

The electrospinning will be described in more detail in the production method described later.

The web-film filter for air purification according to an exemplary embodiment of the present invention may satisfy the physical properties of a PM10 removal efficiency of 70% or more, preferably 80% or more, and more preferably 85% or more at a wind speed of 1 m/s. More specifically, the physical properties of 70 to 98% may be satisfied, but the present invention is not limited thereto. In addition, it was confirmed that the PM10 removal efficiency after being coated with chitosan was more improved as compared with the PM10 removal efficiency when not coated with chitosan. That is, the PM10 removal efficiency after being coated with chitosan was increased as compared with the PM10 removal efficiency when not coated with chitosan by 2% or more, more specifically 2 to 10%.

In addition, the physical properties of a PM2.5 removal efficiency of 60% or more, preferably 70% or more, and more preferably 75% or more at a wind speed of 1 m/s may be satisfied. More specifically, the physical properties of 60 to 95% may be satisfied, but the present invention is not limited thereto. In addition, it was confirmed that the PM2.5 removal efficiency after being coated with chitosan was more improved as compared with the PM2.5 removal efficiency when not coated with chitosan. That is, the PM 2.5 removal efficiency after being coated with chitosan was increased as compared with the PM2.5 removal efficiency when not coated with chitosan by 3% or more, more specifically 3 to 15%.

The web-film filter for air purification according to an exemplary embodiment of the present invention may have a PM10 removal quality factor of 0.05 Pa$^{-1}$ or more, preferably 0.06 Pa$^{-1}$ or more, and more specifically 0.05 to 0.15 Pa$^{-1}$ at a wind speed of 1 m/s. In addition, the PM2.5 removal quality factor may be 0.04 Pa$^{-1}$ or more, preferably 0.45 Pa$^{-1}$ or more, and more specifically 0.04 to 0.12 Pa$^{-1}$ at a wind speed of 1 m/s.

When the web-film filter for air purification according to an exemplary embodiment of the present invention is immersed in water for 10 minutes and then dried for 24 hours, and the PM10 removal efficiency and the PM2.5 removal efficiency are measured in a chamber having a relative humidity of 90% RH, the removal efficiency reduced amount according to the following Equation 1 may be 3% or less, and more preferably 2% or less:

[Equation 1]

$$\text{Removal efficiency reduced amount} = Re_1 - Re_2$$

wherein $Re_1$ is a PM removal efficiency of a filter in its initial state which is not immersed in water at a wind speed of 1 m/s, and $Re_2$ is a PM removal efficiency of a filter which is immersed in water for 10 minutes and then dried for 24 hours at a wind speed of 1 m/s.

Since the web-film filter for air purification according to an exemplary embodiment of the present invention shows an excellent particulate matter adsorption removal efficiency as described above, and also has a virus adsorption effect, it may be applied to various fields as a filter for air purification. Specifically, for example, it may be applied to a face mask product, a filter for an air cleaner, or the like, but is not limited thereto.

Next, an exemplary embodiment of the method of producing a web-film filter for air purification of the present invention will be described.

The method of producing a web-film filter for air purification according to an exemplary embodiment of the present invention

includes:

a) electrospinning a polymer solution including an aliphatic polyester and a solvent to produce a web-film; and
b) coating or impregnating the web-film with a chitosan aqueous solution.

In step a), since the aliphatic polyester and the solvent are as described above, the redundant description thereof will be omitted. The polymer solution may have a solid content of the aliphatic polyester of 5 to 20 wt%, more preferably 10 to 15 wt%. Within the range, electrospinning is stably performed without causing breaks, and it is advantageous for spinning microfiber having excellent fine dust adsorption efficiency, which is thus preferred, but the present invention is not necessarily limited thereto.

The electrospinning is not limited as long as it is a common electrospinning, but specifically, for example, the electrospinning may be performed so that the microfiber has a diameter in a range of 50 nm to 50 $\mu$m, more preferably 100 nm to 40 $\mu$m.

More specifically, for example, the electrospinning may be performed by passing the polymer solution prepared above through a metal nozzle of 16 to 32 gauge by a syringe pump at a speed of 0.1 to 20 mL/h, and applying a voltage of 5 to 60 kV by a power supply. Here, a distance between a nozzle tip and a grounded collector electrode may be maintained at 10 to 50 cm. The collector electrode may be formed of a round metal plate, specifically, an aluminum plate having a diameter of 5 to 30 cm. A web-film may be produced by spinning for 1 to 10 minutes.

Next, a step of coating or impregnating the web-film produced above with a chitosan aqueous solution is performed.

Here, as an exemplary embodiment, the chitosan aqueous solution may be an aqueous solution of pH 2 to 6 including any one or more selected from chitosan nanoparticles and nanowhiskers.

More specifically, a method of preparing the chitosan aqueous solution including any one or more selected from chitosan nanoparticles and nanowhiskers may be performed by using a known method to prepare chitosan nanoparticles and nanowhiskers, which are then prepared as an aqueous solution of pH 2 to 6.

More specifically, for example, though not limited thereto, the method may include a) hydrolyzing chitosan or $\alpha$-chitin powder in an acid solution; b) stirring the hydrolyzed chitin and a basic solution and then washing the solution; and c) preparing the obtained chitosan as an aqueous solution of pH 2 to 6.

In step a), any acid solution may be used without limitation as long as it may usually hydrolyze chitosan or $\alpha$-chitin powder, and specifically, for example, an organic acid may be used, and more specifically, an aqueous solution of hydrochloric acid, lactic acid, acetic acid, propionic acid, formic acid, ascorbic acid, tartaric acid, and the like may be used. The hydrolysis may be performed at 100 to 150°C for 1 to 10 hours, and when the hydrolysis is completed, it is preferred to wash the film with distilled water to sufficiently remove the acid solution.

Next, in step b), hydrolyzed chitin is stirred in a basic solution, in which as the basic solution, sodium hydroxide and the like may be used, but the present invention is not limited thereto. The stirring step may be performed at a temperature of 50 to 100°C for 1 to 20 hours, and after stirring, it is preferred to wash the film with distilled water to sufficiently remove the basic solution.

Next, in step c), titration is performed again with the acid solution to neutralize the pH, dialysis is performed to remove a residual base, and finally, the prepared chitosan is prepared as an aqueous solution, more specifically a chitosan aqueous solution of 0.05 to 0.5 wt% and an acid solution is used to adjust the pH to 2 to 6. Here, in a range of pH 2 to 6 of the chitosan aqueous solution, better fine dust adsorption efficiency may be achieved, and a virus adsorption effect may be achieved, which is thus preferred.

The chitosan may be specifically, any one or more selected from chitosan nanoparticles and nanowhiskers. Though not limited thereto, the chitosan nanoparticles may have an average particle diameter of 5 nm to 500 nm, and the nanowhiskers may have an average diameter of 5 nm to 500 nm and an aspect ratio (long axis/ short axis) of 2 to 100, but the present invention is not limited thereto. The average particle diameter and the average length may be measured by observation with a scanning electron microscope (SEM).

Another exemplary embodiment of the chitosan aqueous solution may be the chitosan aqueous solution as it is, or an aqueous solution of pH 2 to 6 including acetylated chitosan.

More specifically, a method of preparing the chitosan aqueous solution including acetylated chitosan may be obtaining acetylated chitosan by an acetylation method of known chitosan and preparing the acetylated chitosan as an aqueous solution of pH 2 to 6. In the method of acetylating chitosan, chitosan or chitosan oligosaccharide is used as a raw material, which may be reacted with an acetylating agent to obtain acetylated chitosan. The acetylated chitosan has a degree of acetylation of preferably 90% or less, and more preferably 70% or less. Within the range, a better fine dust adsorption efficiency may be achieved and a virus adsorption effect may be achieved, which is thus preferred.

More specifically, for example, though not limited thereto, the chitosan aqueous solution may be prepared by including i) adding any one or more acetylating agents selected from acetic acid and anhydrous acetic acid to a dispersion in which chitosan or chitosan oligosaccharide is in a state of being dispersed in water or a mixed solvent of water and an organic solvent to perform an acetylation reaction; ii) stirring an acetylated reactant and a basic solution and then washing the solution; and iii) preparing the obtained acetylated chitosan as an aqueous solution of pH 2 to 6.

In step i), as the organic solvent, for example, alcohol, more specifically, ethanol, methanol, and the like may be used, but the present invention is not limited thereto. More specifically, in the acetylation reaction, stirring may be performed at room temperature for 10 minutes to 2 hours.

In step ii), as the basic solution, though not limited thereto, a sodium hydroxide and the like may be used.

Next, in step iii), the aqueous solution may have, though not limited thereto, a solid content of 0.01 to 1 wt%.

Another exemplary embodiment of the method of preparing a chitosan aqueous solution including acetylated chitosan may include a) dissolving chitosan or chitosan oligosaccharide in an acetic acid aqueous solution to prepare a chitosan solution and then adding a mixture of anhydrous acetic acid with an organic solvent to the chitosan solution to perform an acetylation reaction; b) stirring the acetylated reactant and a basic solution and then washing the solution; and c) preparing the obtained acetylated chitosan as an aqueous solution of pH 2 to 6.

In step a), as the organic solvent, for example, alcohol, more specifically, ethanol, methanol, and the like may be used, but the present invention is not limited thereto. More specifically, in the acetylation reaction, stirring may be performed at room temperature for 10 minutes to 2 hours.

In step b), as the basic solution, though not limited thereto, a sodium hydroxide and the like may be used.

Next, in step c), the aqueous solution may have, though not limited thereto, a solid content of 0.01 to 1 wt%.

The step of coating or impregnating the web-film with the chitosan aqueous solution may be performed by a common coating or impregnation method, and thus, is not limited. More preferably, the web-film may be immersed in the chitosan aqueous solution at room temperature, more specifically at 20 to 25°C to be sufficiently immersed, and then the film may be dried until the chitosan aqueous solution is dried.

Hereinafter, the present invention will be described in more detail with reference to the Examples and Comparative Examples. However, the following Examples and Comparative Examples are only an example for describing the present invention in more detail, and do not limit the present invention in any way.

1. Measurement of fiber diameter:

The shape and pore size of an aliphatic polyester microfiber forming a web-film were observed using a scanning electron microscope (FE-SEM, MIRA3, Tescan Co.). For observing a nonconductive polymer fiber, the film was plasma-coated at 15 mA for 90 minutes in a vacuum state to form a platinum (Pt) thin film having a thickness of about 7 nm on the surface of the fiber. 5 spots in an area of the web-film of $3 \times 3$ cm$^2$ were photographed to calculate an average diameter of 100 stands of fiber.

2. Confirmation whether chitosan was coated:

Energy dispersive spectroscopy (EDS, Noran System7, Thermo Fisher Scientific Inc.) was used to examine each of the web-film which was not coated with chitosan and the coated web-film. By detecting a nitrogen (N) element forming chitosan, it was confirmed whether a chitosan coating layer was formed on the surface of the fiber and also coating uniformity was confirmed.

3. Web-film basis weight (weight per web-film unit area, g/m$^2$):

Since a web-film in which microfiber is non-uniformly trapped has an uneven thickness, a basis weight was used as a concept of a thickness and a constituent fiber density. Before trapping the microfiber, a weight of a PET frame was measured with an electronic scale. Then, after trapping the microfiber in the frame, a weight gain was calculated. A weight increase was divided by a real area of the web-film trapped in a circle to determine the basis weight. The process was repeated a total of 5 times to calculate an average value of the basis weight.

4. Particulate matter removal efficiency (%) experiment:

A particulate matter (PM) filter experimental device was manufactured as shown in FIG. 1. PM occurred by burning a piece of paper having a diameter of 5 mm in a closed particulate matter chamber, and the number of burning pieces of paper was adjusted to control a particulate matter generation amount. PM which had occurred in the chamber was flowed to a filter efficiency measuring cylinder at a wind speed of about 1 m/s through an air compressor, and a particulate matter amount was repeatedly measured 10 times, respectively, with a particle counter (DT-9881M, CEM Instrument Co., China) to calculate the removal efficiency (%). The relative humidity was 15%.

5. Pressure drop (Pa):

For evaluating an intake resistance of a filter, a flow meter was used in the particulate matter removal efficiency experimental device to measure a pressure drop using a flow meter (DT-8920, CEM Instrument Co., China). After mounting the microfiber filter, the air compressor was used to pass air at a wind speed of 1 m/s. Here, a difference in air pressure between both sides of the filter was measured 10 times to determine an average pressure drop. Particulate matter did not occur.

6. Quality factor (Pa$^{-1}$):

The particulate matter removal efficiency and the pressure drop are the most important performance index of a dust-proof filter, and a filter having high removal efficiency and low pressure drop is evaluated as a good quality filter. This may be quantified using a quality factor (QF) and is calculated by the following Equation:

$$QF = -\ln(1-E\%)/\triangle P$$

wherein E% denotes a particulate matter removal efficiency and $\triangle$P denotes a pressure drop. Both the removal efficiency and the pressure drop are variable of QF, but it is known that influence of the pressure drop is relatively dominant. Therefore, it is recommended to use it as a performance comparison element of similar grade filters rather than filters having completely different characteristics.

7. Particulate matter removal efficiency reduced amount (%) after exposure to moisture:

For evaluating continuance of a particulate matter electrostatic adsorption effect of chitosan, a water/high humidity exposure experiment was performed.

A web-film coated with the chitosan of the example, and a commercial mask of the comparative example were immersed in tap water for 10 minutes, and then dried for 24 hours or more. Thereafter, the particulate matter removal efficiency experiment was performed. Here, the relative humidity of the particulate matter occurrence chamber was set at 90% RH or more using a humidifier. A particulate matter amount depending on the presence/absence of the filter was repeatedly measured 10 times, respectively, to calculate a removal efficiency (%).

In addition, the measured removal efficiency was used to calculate a removal efficiency reduced amount from the following equation:

$$Removal\ efficiency\ reduced\ amount = Re_1 - Re_2$$

wherein $Re_1$ is a PM removal efficiency of a filter in its initial state which is not immersed in water at a wind speed of 1 m/s, and $Re_2$ is a PM removal efficiency of a filter which is immersed in water for 10 minutes and then dried for 24 hours at a wind speed of 1 m/s.

8. An average hydrodynamic diameter: the average hydrodynamic diameter was obtained from an aqueous solution in which the average diameter of chitosan nanoparticles: 0.1 wt% are dispersed using a Zetasizer (Nano ZS, Malvern).

9. Calculation of degree of acetylation by titration of chitosan polymer:

Dried chitosan (50 mg) to be measured was stirred with 0.01 M HCl aqueous solution (15 ml) for one day to completely cationize an amine functional group of chitosan. To the solution, a 0.025 M NaOH aqueous solution was added when the pH value of a pH meter (Orion star A211, Thermo Scientific) was 11.0, while neutralizing the solution at a rate of 0.05 ml/min using a syringe pump (Legato 200, kdScientific), and a conductivity was measured with a conductivity meter (912 Conductometer, Metrohm).

A degree of acetylation (%DA) was determined from the following equation:

$$\%DA = (1 - \frac{[BASE](V_2 - V_1)161}{m}) \times 100$$

[base]: a concentration (mol/L) of the NaOH aqueous solution
$V_2$-$V_1$: a volume (mL) of the NaOH aqueous solution required to neutralize an ammonium functional group (between conductivity inflection points)
161: a molar mass (g/mol) of a chitosan repeating unit
m: dry mass of the sample (mg)

[Preparation Example 1] Preparation of chitosan aqueous solution

5 g of α-chitin powder was stirred in 150 mL of 3M HCl solution at 120°C for 3 hours to perform hydrolyzation and the solution was washed with distilled water to sufficiently remove HCl. 3 g of hydrolyzed chitin was stirred in 100 mL of a 30% NaOH solution at 80°C for 6 hours, and then the solution was washed with distilled water to sufficiently remove NaOH. Thereafter, titration was performed with HCl to neutralize pH and dialysis was performed to remove a residual salt. Finally, a 0.2 wt% aqueous solution was prepared with the prepared chitosan and the pH of the solution was adjusted to 4 with 0.1 M HCl. An average hydrodynamic diameter measured with the Zetasizer was 130 nm.

[Preparation Example 2] Preparation of chitosan aqueous solution

5 g of α-chitin powder was stirred in 150 mL of 3M HCl solution at 120°C for 3 hours to perform hydrolyzation and the solution was washed with distilled water to sufficiently remove HCl. 3 g of hydrolyzed chitin was stirred in 100 mL of a 30% NaOH solution at 80°C for 6 hours, and then the solution was washed with distilled water to sufficiently remove NaOH. Thereafter, titration was performed with HCl to neutralize pH and dialysis was performed to remove a residual salt. Finally, a 0.2 wt% aqueous solution was prepared with the prepared chitosan and the final pH of the solution was adjusted to 7. An average hydrodynamic diameter measured with the Zetasizer was 10 μm.

[Preparation Example 3] Preparation of chitosan aqueous solution having adjusted degree of acetylation

Chitosan having a degree of acetylation of 25% was prepared as a 0.2 wt% aqueous solution by purchasing a commercial product having a molecular weight in terms of viscosity of 50,000 to 190,000 from Sigma-Aldrich, and the pH of the solution was adjusted to 4 with 0.1 M HCl.

[Preparation Example 4] Preparation of chitosan aqueous solution having adjusted degree of acetylation

Chitosan having a degree of acetylation of 50% was prepared as a chitosan solution by dissolving the chitosan having a degree of acetylation of 25% (0.5 g) of Preparation Example 3 in 25 ml of a 0.1 M acetic acid aqueous solution, adding a mixture of 0.05 ml of anhydrous acetic acid and the same amount of methanol to the chitosan solution, stirring the solution at room temperature for 1 hour to form a 2 wt% aqueous solution, and then neutralizing the solution with 2.5 mL of 1 M NaOH aqueous solution. After removing unreacted additives by dialysis, the pH of the solution was adjusted to 4 with 0.1 M HCl to finally prepare a 0.2 wt% of a chitosan aqueous solution.

[Preparation Example 5] Preparation of chitosan aqueous solution having adjusted degree of acetylation

Chitosan having a degree of acetylation of 75% was prepared as a chitosan solution by dissolving the chitosan having a degree of acetylation of 25% (0.5 g) of Preparation Example 3 in 25 ml of a 0.1 M acetic acid aqueous solution, adding a mixture of 0.5 ml of anhydrous acetic acid and the same amount of methanol to the chitosan solution, stirring the solution at room temperature for 1 hour to form a 2 wt% chitosan aqueous solution, and then neutralizing the solution with 2.5 mL of 1 M NaOH solution. After removing unreacted additives by dialysis, the pH of the solution was adjusted to 4 with 0.1 M HCl to finally prepare a 0.2 wt% of a chitosan aqueous solution.

[Preparation Example 6] Preparation of chitosan aqueous solution having adjusted degree of acetylation

Chitosan having a degree of acetylation of 90% was prepared as a chitosan solution by dissolving the chitosan having a degree of acetylation of 25% (0.5 g) in 25 ml of a 0.1 M acetic acid aqueous solution, adding a mixture of 2 ml of anhydrous acetic acid and the same amount of methanol to the chitosan solution, stirring the solution at room temperature for 1 hour to form a 2 wt% chitosan aqueous solution, and then neutralizing the solution with 2.5 mL of 1 M NaOH solution. After removing unreacted additives by dialysis, the pH of the solution was adjusted to 4 with 0.1 M HCl to finally prepare a 0.2 wt% of a chitosan aqueous solution.

[Example 1]

Polybutylene succinate (PBS, number average molecular weight of 60 Kg/mol, 1.2 g) was dissolved in a mixed solvent of chloroform and ethanol (8.8 g, a mass ratio of 9:1) to prepare a 12 wt% of polymer solution.

The polymer solution was electrospun to produce a web-film.

The electrospinning conditions were as follows: the solution was passed through a 25 gauge metal nozzle by a syringe pump (EP120, NanoNC Co., Republic of Korea) at a speed of 4 mL/h. A voltage of 7.5 kV was applied to the tip by a power supply (B130, KSC Co., Republic of Korea). A distance between a nozzle tip and a water-bath-grounded collector electrode was maintained at 20 cm. The collector electrode was formed of a round aluminum plate having a diameter of 8 cm and a glass petri dish having a diameter of 20 cm. A metal plate was immersed in tap water at a depth of 1.5 cm.

The solution was spun for 2 minutes to obtain a web-film of 2.0 $g/m^2$. A fiber diameter was 2.25 um on average. The electrospun fiber was trapped on the surface of a coagulation bath, transferred to a polyethylene terephthalate rectangular frame having a thickness of 100 $\mu$m, and dried at room temperature, and a web-film was peeled off from the rectangular frame.

The produced web-film was immersed in the chitosan aqueous solution prepared in Preparation Example 1, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 2]

The spinning process was performed in the same manner as in Example 1, except that the concentration of PBS was 11 wt% and the metal nozzle had 26 gauge.

The solution was spun for 5 minutes to obtain a web-film of 2.5 $g/m^2$. A fiber diameter was 0.51 um on average.

The produced web-film was immersed in the chitosan aqueous solution prepared in Preparation Example 1, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 3]

A web-film of 5.2 $g/m^2$ was obtained in the same manner as in Example 1, except that the spinning process was performed for 5 minutes. A fiber diameter was 2.25 um on average.

The produced web-film was immersed in the chitosan aqueous solution prepared in Preparation Example 1, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 4]

A web-film of 4.8 $g/m^2$ was obtained in the same manner as in Example 2, except that the spinning process was performed for 10 minutes. A fiber diameter was 0.51 um on average.

The produced web-film was immersed in the chitosan aqueous solution prepared in Preparation Example 1, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 5]

The spinning process of Example 1 was performed for 2 minutes to obtain a web-film of 2.0 $g/m^2$, and spinning

was performed for 5 minutes by the spinning process of Example 2 to produce a laminate film on which a web-film of 2.5 g/m² was laminated.

Finally, the produced web-film was immersed in the chitosan solution prepared in Preparation Example 1, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 6]

A web-film was obtained in the same manner as in Example 1.

The produced web-film was immersed in the chitosan aqueous solution prepared in Preparation Example 2, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 7]

A web-film was obtained in the same manner as in Example 1.

The produced web-film was immersed in the chitosan aqueous solution having a degree of acetylation of 25%, prepared in Preparation Example 3, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 8]

A web-film was obtained in the same manner as in Example 1.

The produced web-film was immersed in the chitosan aqueous solution having a degree of acetylation of 50%, prepared in Preparation Example 4, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 9]

A web-film was obtained in the same manner as in Example 1.

The produced web-film was immersed in the chitosan aqueous solution having a degree of acetylation of 75%, prepared in Preparation Example 5, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Example 10]

A web-film was obtained in the same manner as in Example 1.

The produced web-film was immersed in the chitosan aqueous solution having a degree of acetylation of 90%, prepared in Preparation Example 6, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Comparative Example 1]

The process was performed in the same manner as in Example 1, except that a polyethylene terephthalate web-film having a basis weight of 2.5 g/m² and an average fiber diameter of 0.53 um was used instead of a polybutyl succinate web-film.

Finally, the produced web-film was immersed in the chitosan solution prepared in Preparation Example 1, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Comparative Example 2]

A KR94 grade commercial mask (PRODUCT LAB) made of polypropylene (PP) which adsorbs particulate matter in an electrostatic manner was prepared. An average thickness of a filter except a mask outer layer was measured as 207.2 μm.

Finally, the produced web-film was immersed in the chitosan solution prepared in Preparation Example 1, sufficiently adsorbed at room temperature, and then dried for 24 hours.

The physical properties of the web-film before being coated with the chitosan aqueous solution and the physical properties of the web-film after being coated with the chitosan aqueous solution were measured and are shown in the following Table 1.

[Comparative Example 3]

A web-film was produced by electrospinning the polymer solution in the same manner as in Example 1, except that 0.012 g of the chitosan nanoparticles (average diameter of 200 nm) were added in the preparation of the polymer solution. In addition, the film was not coated with the chitosan aqueous solution.

The physical properties of the thus-prepared web-film were measured, and are shown in the following Table 1.

[Table 1]

| | | Particulate matter removal efficiency (%) | | Quality factor (Pa-1) | | Particulate matter removal efficiency reduced amount (%) after exposure to moisture | | Pressure drop (Pa) |
|---|---|---|---|---|---|---|---|---|
| | | (PM2.5) | (PM10) | (PM2.5) | (PM10) | (PM2.5) | (PM10) | |
| Example 1 | Before coating | 64.6 | 78.8 | 0.094 | 0.141 | 5.1 | 5.1 | 11 |
| | After coating | 78.8 | 86.3 | 0.103 | 0.133 | 0.5 | 0.5 | 15 |
| Example 2 | Before coating | 80.1 | 89.6 | 0.073 | 0.103 | 6.1 | 7.5 | 22 |
| | After coating | 87.7 | 94.6 | 0.091 | 0.127 | 1 | 1 | 23 |
| Example 3 | Before coating | 77.6 | 88.5 | 0.048 | 0.070 | 8.1 | 9.2 | 31 |
| | After coating | 87.8 | 93.4 | 0.054 | 0.070 | 0.5 | 0.5 | 39 |
| Example 4 | Before coating | 86.8 | 93.6 | 0.043 | 0.058 | 7 | 8 | 47 |
| | After coating | 90.8 | 96.0 | 0.045 | 0.060 | 0.5 | 0.8 | 53 |
| Example 5 | Before coating | 87.5 | 93.8 | 0.067 | 0.090 | 8.1 | 9.2 | 31 |
| | After coating | 93.5 | 97.4 | 0.074 | 0.098 | 1 | 1 | 37 |

(continued)

| | | Particulate matter removal efficiency (%) | | Quality factor (Pa-1) | | Particulate matter removal efficiency reduced amount (%) after exposure to moisture | | Pressure drop (Pa) |
|---|---|---|---|---|---|---|---|---|
| | | (PM2.5) | (PM10) | (PM2.5) | (PM10) | (PM2. 5) | (PM10) | |
| Example 6 | Before coating | 64.6 | 78.8 | 0.094 | 0.141 | 7.6 | 6.7 | 11 |
| | After coating | 68.2 | 81.2 | 0.082 | 0.119 | 0.6 | 0.6 | 14 |
| Example 7 | Before coating | 64.6 | 78.8 | 0.094 | 0.141 | 5.1 | 5.1 | 11 |
| | After coating | 78.1 | 85.6 | 0.089 | 0.114 | 0.3 | 0.3 | 17 |
| Example 8 | Before coating | 64.6 | 78.8 | 0.094 | 0.141 | 5.1 | 5.1 | 11 |
| | After coating | 77.7 | 85.1 | 0.083 | 0.106 | 0.5 | 0.5 | 18 |
| Example 9 | Before coating | 64.6 | 78.8 | 0.094 | 0.141 | 5.1 | 5.1 | 11 |
| | After coating | 75.9 | 83.8 | 0.075 | 0.096 | 1.1 | 1.2 | 19 |
| Example 10 | Before coating | 64.6 | 78.8 | 0.094 | 0.141 | 5.1 | 5.1 | 11 |
| | After coating | 73.0 | 80.1 | 0.060 | 0.073 | 1.2 | 1.3 | 22 |
| Comparative Example 1 | Before coating | 84.6 | 85.8 | 0.074 | 0.078 | 35.5 | 34.5 | 25 |
| | After coating | 85.7 | 85.9 | 0.078 | 0.078 | 26.0 | 25.0 | 25 |
| Comparative Example 2 | Before coating | 98.6 | 98.6 | 0.122 | 0.122 | 23.6 | 23.2 | 35 |
| | After coating | 79.6 | 79.7 | 0.045 | 0.045 | 22.5 | 22.3 | 35 |
| Comparative Example 3 | | 60.8 | 74.7 | 0.072 | 0.106 | 20.1 | 20.5 | 13 |

As shown in Table 1, microfibers having various thicknesses were able to be stably produced by adjusting the concentration of the polymer solution and the nozzle size.

In addition, as a result of confirming presence or absence of chitosan coating by scanning electron microscope energy dispersive X-ray analysis (EDX) mapping, it was confirmed that the surface of microfiber was effectively coated with chitosan by coating the chitosan aqueous solution immersion.

It was also possible to efficiently remove particulate matter with the web-film of microfiber having no chitosan coating. A PM10 removal efficiency of 70% or more and a PM2.5 removal efficiency of 60% or more were achieved at a wind speed of 1 m/s. However, the web-film of microfiber coated with chitosan showed more improved microfiber removal efficiency. It was confirmed that by coating chitosan on the surface, the PM10 removal efficiency was increased by 2% or more as compared with that before being coated with chitosan and the PM2.5 removal efficiency was increased by 3% or more as compared with that before being coated with chitosan, at a wind speed of 1 m/s.

In addition, removal efficiency was hardly reduced by moisture/humidity due to the endogenous electrostatic effect. By coating chitosan on the surface, the PM removal efficiency reduction of 3% or less was achieved at a wind speed of 1 m/s after exposure to the moisture (water/high humidity) conditions as compared with that before exposure to moisture (water/high humidity).

In Comparative Example 1, the nano-web produced by polyethylene terephthalate had a high particulate matter removal efficiency, but when exposed to moisture, had a greatly reduced fine dust removal efficiency by up to about 30%.

In addition, in Comparative Example 1, it was confirmed that when the chitosan aqueous solution was coated, the fine dust removal efficiency was not greatly increased, and even after being in contact with moisture, the fine dust removal efficiency was reduced by about 25%.

In Comparative Example 2, it was confirmed that the conventional electrostatic adsorption type mask was used, and the particulate matter removal efficiency was high, but static electricity was removed after being directly exposed to moisture, and thus, the particulate matter removal efficiency was greatly reduced. In particular, in Comparative Example 2, it was confirmed that a degree of fine dust adsorption was greatly decreased unlike the examples, by chitosan coating. This is due to the fact that the static electricity of Comparative Example 2 was rapidly reduced from the start of immersion in the chitosan aqueous solution, and then the fine dust adsorption efficiency was rapidly reduced.

In addition, when the chitosan nanoparticles were mixed in the polymer solution and the solution was spun as in Comparative Example 3, it was confirmed that the particulate matter removal efficiency was reduced by 20% or more.

[Biodegradability Evaluation Example]

A Web-film (26.5 mg) produced in Example 1 was evaluated for decomposition in a phosphate buffer solution having a molar concentration of 0.1 containing a lipase from thermomyces lanuginosus enzyme (0.2 mg/ml) at a temperature of 50°C. Photographs over time were taken and mass changes were measured each time. For decomposition evaluation in soil, the web-film was buried in compost soil at a temperature of 50°C and a relative humidity of 30% and photographs of change over time were taken every week. It was confirmed that under enzyme decomposition conditions and under the soil decomposition conditions, complete biodegradability was confirmed within 7 hours and 4 weeks, respectively (see FIG. 2).

[Virus Adsorption Evaluation Example]

0.5 ml of *Escherichia coli bacteriophage Phi* X174 (American Type Culture Collection (ATCC, VA, USA)) virus solution was added to a 0.5 mL tube and the solution was diluted 10 times with distilled water. Thereafter, in the experiment in which a virus solution was sprayed on the particulate matter filter experiment chamber and then flowed with compressed air, the web-film, produced in Example 2, was used as a filter.

It was confirmed that the web-film of which the surface was coated with chitosan may provide antibacterial activity in addition to biodegradability. It was also confirmed by an electron microscope that viruses were attached by electrostatic force by an amine group.

It was also confirmed that the viruses which penetrated through a filter may be removed by chitosan, and the adhesive strength was good so that the viruses were attached to fiber even after washing the filter. As a comparative experiment, on the polymer PET surface having no chitosan, most of the viruses were washed away (see FIG. 3) .

Hereinabove, although the present invention has been described by specific matters, limited exemplary embodiments, and drawings, they have been provided only for assisting the entire understanding of the present invention, and the present invention is not limited to the exemplary embodiments, and various modifications and changes may be made by those skilled in the art to which the present invention pertains from the description.

Therefore, the spirit of the present invention should not be limited to the above-described exemplary embodiments, and the following claims as well as all modified equally or equivalently to the claims are intended to fall within the scope and spirit of the invention.

**Claims**

1. A web-film filter for air purification in which a web-film including an aliphatic polyester microfiber is coated or impregnated with an aqueous solution of pH 2 to 6 including chitosan.

2. The web-film filter for air purification of claim 1, wherein the chitosan is any one or more selected from chitosan nanoparticles and nanowhiskers.

3. The web-film filter for air purification of claim 1, wherein the filter is obtained by coating or impregnating the web-film including an aliphatic polyester microfiber with the aqueous solution of pH 2 to 6 including any one or more selected from chitosan nanoparticles and nanowhiskers.

4. The web-film filter for air purification of claim 1, wherein the microfiber has a diameter of 50 nm to 50 um.

5. The web-film filter for air purification of claim 1, wherein the chitosan is acetylated chitosan.

6. The web-film filter for air purification of claim 5, wherein the acetylated chitosan has a degree of acetylation of 90% or less.

7. The web-film filter for air purification of claim 1, wherein a PM10 removal efficiency is 70% or more at a wind speed of 1 m/s.

8. The web-film filter for air purification of claim 1, wherein a PM2.5 removal efficiency is 60% or more at a wind speed of 1 m/s.

9. The web-film filter for air purification of claim 1, wherein a PM10 removal quality factor is 0.05 Pa$^{-1}$ or more at a wind speed of 1 m/s.

10. The web-film filter for air purification of claim 1, wherein a PM2.5 removal quality factor is 0.04 Pa$^{-1}$ or more at a wind speed of 1 m/s.

11. The web-film filter for air purification of claim 1, wherein the aliphatic polyester is any one or a mixture of two or more selected from the group consisting of polyhydroxybutyrate (PHP), polyhydroxybutyrate-co-valerate (PHBV), polycaprolactam, polybutylene succinate, polybutylene succinate-co-adipate, polyglycolic acid (PGA), polylactide or polylactic acid (PLA), polybutylene oxalate, polyethylene adipate, polyparadioxanone, polymorpholinebione, polybutylene adipate-co-terephthalate, polybutylene adipate-co-furanoate, and polydioxipane-2-one.

12. The web-film filter for air purification of claim 1, wherein when the filter is immersed in water for 10 minutes and then dried for 24 hours, and the PM10 removal efficiency and the PM2.5 removal efficiency are measured in a chamber having a relative humidity of 90% RH, a removal efficiency reduced amount according to the following Equation 1 is 3% or less:

[Equation 1]

$$\text{Removal efficiency reduced amount} = Re_1 - Re_2$$

wherein $Re_1$ is a PM removal efficiency of a filter in its initial state which is not immersed in water at a wind speed of 1 m/s, and $Re_2$ is a PM removal efficiency of a filter which is immersed in water for 10 minutes and then dried for 24 hours at a wind speed of 1 m/s.

13. A face mask product using the web-film filter of any one of claims 1 to 12.

14. An air cleaner using the web-film filter of any one of claims 1 to 12.

15. A method of producing a web-film filter for air purification, the method comprising:

a) electrospinning a polymer solution including an aliphatic polyester and a solvent to produce a web-film; and
b) coating or impregnating the web-film with a chitosan aqueous solution of pH 2 to 6 including chitosan.

16. The method of producing a web-film filter for air purification of claim 15, wherein the chitosan aqueous solution is prepared by including:

hydrolyzing chitosan or $\alpha$-chitin powder in an acid solution;
stirring the hydrolyzed chitin and a basic solution and then washing the solution; and
preparing the obtained chitosan as an aqueous solution of pH 2 to 6.

17. The method of producing a web-film filter for air purification of claim 16, wherein the chitosan is any one or more selected from chitosan nanoparticles and nanowhiskers.

18. The method of producing a web-film filter for air purification of claim 15, wherein the chitosan aqueous solution is prepared by including:

adding any one or more acetylating agents selected from acetic acid and anhydrous acetic acid to a dispersion in which chitosan or chitosan oligosaccharide is in a state of being dispersed in water or a mixed solvent of water and an organic solvent to perform an acetylation reaction;
stirring an acetylated reactant and a basic solution and then washing the solution; and
preparing the obtained acetylated chitosan as an aqueous solution of pH 2 to 6.

19. The method of producing a web-film filter for air purification of claim 18, wherein the acetylated chitosan has a degree of acetylation of 90% or less.

[FIG. 1]

[FIG. 2]

[FIG. 3]

## INTERNATIONAL SEARCH REPORT

| International application No. |
|---|
| **PCT/KR2021/011068** |

**A. CLASSIFICATION OF SUBJECT MATTER**

**B01D 39/16**(2006.01)i; **B01D 46/00**(2006.01)i; **A62B 23/02**(2006.01)i

According to International Patent Classification (IPC) or to both national classification and IPC

**B. FIELDS SEARCHED**

Minimum documentation searched (classification system followed by classification symbols)

B01D 39/16(2006.01); A01N 63/00(2006.01); B01D 39/00(2006.01); B01D 46/54(2006.01); B03C 3/32(2006.01); C08B 37/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스터 (polyester), 섬유 (fiber), 웹 (web), 필름 (film), 키토산 (chitosan), 필터 (filter)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1321493 B1 (KOREA RESEARCH INSTITUTE OF CHEMICAL TECHNOLOGY) 28 October 2013 (2013-10-28)<br>See paragraphs [0021]-[0043] and [0064]-[0073]; and claims 1-3. | 1-19 |
| Y | JP 2018-001063 A (JNC CORP. et al.) 11 January 2018 (2018-01-11)<br>See paragraphs [0013]-[0043]; and claim 6. | 1-19 |
| Y | KR 10-1998-0076412 A (KIM, Kong Su et al.) 16 November 1998 (1998-11-16)<br>See page 2. | 16-19 |
| A | KR 10-0451399 B1 (KUNPOONG BIO CO., LTD.) 06 October 2004 (2004-10-06)<br>See entire document. | 1-19 |
| A | KR 10-0315334 B1 (KOREA INSTITUTE OF INDUSTRIAL TECHNOLOGY) 09 August 2002 (2002-08-09)<br>See entire document. | 1-19 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 November 2021** | **01 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| | International application No. |
|---|---|
| | **PCT/KR2021/011068** |

| Patent document cited in search report | | | Publication date (day/month/year) | Patent family member(s) | | | Publication date (day/month/year) |
|---|---|---|---|---|---|---|---|
| KR | 10-1321493 | B1 | 28 October 2013 | KR 10-2013-0019313 | | A | 26 February 2013 |
| JP | 2018-001063 | A | 11 January 2018 | CN | 109152969 | A | 04 January 2019 |
| | | | | EP | 3476455 | A1 | 01 May 2019 |
| | | | | US | 2019-0168144 | A1 | 06 June 2019 |
| | | | | WO | 2018-003807 | A1 | 04 January 2018 |
| KR | 10-1998-0076412 | A | 16 November 1998 | None | | | |
| KR | 10-0451399 | B1 | 06 October 2004 | JP | 2005-508406 | A | 31 March 2005 |
| | | | | JP | 4054762 | B2 | 05 March 2008 |
| | | | | KR 10-2003-0037122 | | A | 12 May 2003 |
| | | | | US | 2004-0242537 | A1 | 02 December 2004 |
| | | | | WO | 03-037935 | A1 | 08 May 2003 |
| KR | 10-0315334 | B1 | 09 August 2002 | KR 10-1999-0023143 | | A | 25 March 1999 |

Form PCT/ISA/210 (patent family annex) (July 2019)